(19) Europäisches Patentamt / European Patent Office / Office européen des brevets

(11) **EP 2 670 151 A1**

(12) **EUROPEAN PATENT APPLICATION**

(43) Date of publication:
**04.12.2013 Bulletin 2013/49**

(51) Int Cl.:
**H04N 17/00** (2006.01)   **G06T 7/00** (2006.01)

(21) Application number: **13169169.3**

(22) Date of filing: **24.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.05.2012 IN MU15942012**

(71) Applicant: **Tektronix Inc.**
**Beaverton**
**Oregon 97077-0001 (US)**

(72) Inventors:
• **Ramaswamy, Seshadri**
  **560040 Karnataka (IN)**
• **Karegoudar, Malateshgouda**
  **560085 Karnataka (IN)**

(74) Representative: **Clarke, Jeffrey**
**Harrison Goddard Foote LLP**
**Fountain Precinct**
**Balm Green**
**Sheffield, Yorkshire S1 2JA (GB)**

(54) **Heuristic method for drop frame detection in digital baseband video**

(57) A video detector for detecting dropped frames in a video according to embodiments of the invention may include a quality measurer structured to generate a quality measure of a transition between a current frame and a previous frame, a dynamic threshold generator structured to generate a threshold value based on a comparison of blocks within the current frame, and an identifier structured to indicate the video as having a dropped frame based on a comparison between the difference value and the threshold value. Methods of performing dropped frame detection in a video stream are also described.

FIGURE 6

EP 2 670 151 A1

**Description**

FIELD OF THE INVENTION

This disclosure is directed toward analysis of video, and, more particularly, to detecting when video frames have been dropped in a video stream.

BACKGROUND

A video or video stream is a collection of sequential image frames. Sometimes, due to any of a number of factors, some of the frames can be dropped during a video transfer, and the resulting video suffers in quality. For example, frames can be dropped as a consequence of a low-bandwidth transmission channel, high encoding complexity, or even during conversion from a tape-based workflow to a file-based one.

One video quality measuring metric is called Quality of Experience (QOE), which ascribes a numeric value to the video or portions of the video. Dropped frames lower the QOE, because watching a video that includes a substantial number of dropped frames is frustrating and not a pleasant viewing experience for the user.

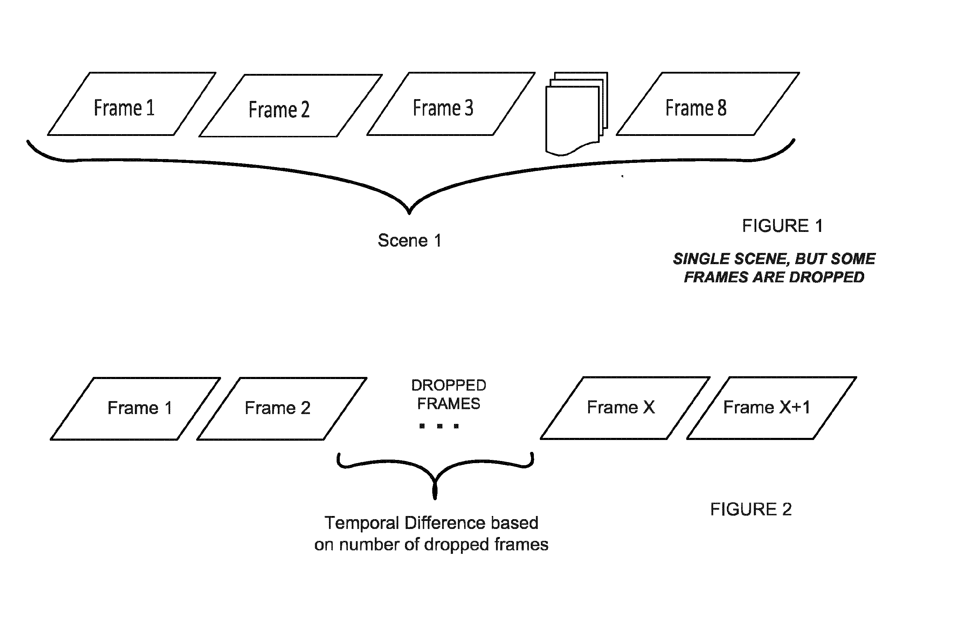

A typical scenario depicting dropped frames is illustrated in Fig. 1. Frames 1, 2, and 3 are present in the video but frames 4-7 have been dropped. The video continues with Frame 8.

Automated dropped frame detection is an inherently difficult problem to solve because there are a large number of factors, such as the amount of motion in the video, the nature of the video content, large luminance variations due to flashing lights or other causes in the video, a subjective nature of the perceived jerkiness, the captured frame rate at the source, and the number dropped frames themselves, for example.

One attempt to solve the problem of automated dropped frame detection is described in a paper titled "A no-reference (NR) and reduced reference (RR) metric for detecting dropped video frames," by Steven Wolf, and included in "Proceedings of the Fourth International Workshop on Video Processing and Quality Metrics for Consumer Electronics, Jan. 2009. The reported method makes use of "Motion Energy Time History" across N frames of a video sequence. It then uses this information to generate a threshold to determine whether video frames were dropped. A potential drawback of this method is that it relies only on the luminance variation of the video frames, and ignores other possible distortions. Also, this method works only on the "global" frame level when calculating the "Motion Energy Time History".

Embodiments of the invention address these and other limitations of the prior art.

SUMMARY OF THE INVENTION

Embodiments of the invention address a deficiency in the prior art for detecting dropped frames in a video stream. A video detector for detecting dropped frames in a video according to embodiments of the invention may include a quality measurer structured to generate a quality measure of a transition between a current frame and a previous frame, a dynamic threshold generator structured to generate a threshold value based on a comparison of blocks within the current frame, and an identifier structured to indicate the video as having a dropped frame based on a comparison between the difference value and the threshold value. Further, embodiments of the invention may include methods used to detect dropped frames in a video stream. Example methods may include first determining a quality measure of a transition in a video to a current frame from a previous frame, then comparing the quality measure to a threshold difference level. The method then indicates that there is a dropped frame in the stream of video frames when the quality measure meets or exceeds the threshold difference level. Other variations of the video detector and methods of detecting dropped frames are described below.

BRIEF DESCRIPTION OF THE DRAWINGS

Fig. 1 illustrates a series of video frames of a single scene in a video that may be determined to have dropped frames by embodiments of the invention.

Fig. 2 illustrates a temporal difference caused by dropped frames that is used by embodiments of the invention.

Fig. 3 illustrates a series of video frames of two scenes in a video that may not be determined to have dropped frames by embodiments of the invention.

Fig. 4 is flowchart illustrating an example method of detecting dropped frames in a video according to embodiments of the invention.

Fig. 5 is a flowchart illustrating an example method of deriving a dynamic threshold level according to embodiments of the invention.

Fig. 6 is a block diagram illustrating components of a video detector structured to identify dropped frames of a video according to embodiments of the invention.

DETAILED DESCRIPTION

A Structural Similarity Index Metric (SSIM) is an objective quality metric for evaluating video, and is generally described in a paper entitled "Image Quality Assessment: From Error Visibility to Structural Similarity," by Z. Wang, et al, and published in IEEE Transactions on Image Processing, Vol. 13, No. 4, April 2004, and incorporated by reference herein.

SSIM has been used only as a quality metric to evaluate the distortion between an original frame and the corresponding compressed frame after applying lossy video compression techniques. Embodiments of the invention, however, first expands the concept of SSIM to one of transitions between frames, then examines qualities about the generated SSIM to help determine whether frames have been dropped in the video under consideration.

SSIM is known to model the human visual system (HVS), as it takes into account the variations in luminance (L), contrast (C), and structure (S) in evaluating two video frames. Each of the components L, C and S are defined as follows

$$\text{Eq.1} \quad L = (2 * U_x * U_y + C1) / ((U_x)2 + (U_y)2 + C1)$$

$$\text{Eq. 2} \quad C = (2 * \sigma_x * \sigma_y) + C2) / ((\sigma_x)2 + (\sigma_y)2 + C2)$$

$$\text{Eq. 3} \quad S = (\sigma_{xy} + C3) / ((\sigma_x * \sigma_y) + C3)$$

The overall SSIM is a product of these components, and is defined as,

$$\text{Eq. 4} \quad SSIM(x,y) = (2 * U_x * U_y + C1) * (2 * \sigma_{xy} + C2) / (((U_x)2 + (U_y)2 + C1) * ((\sigma_x)2 + (\sigma_y)2 + C2))$$

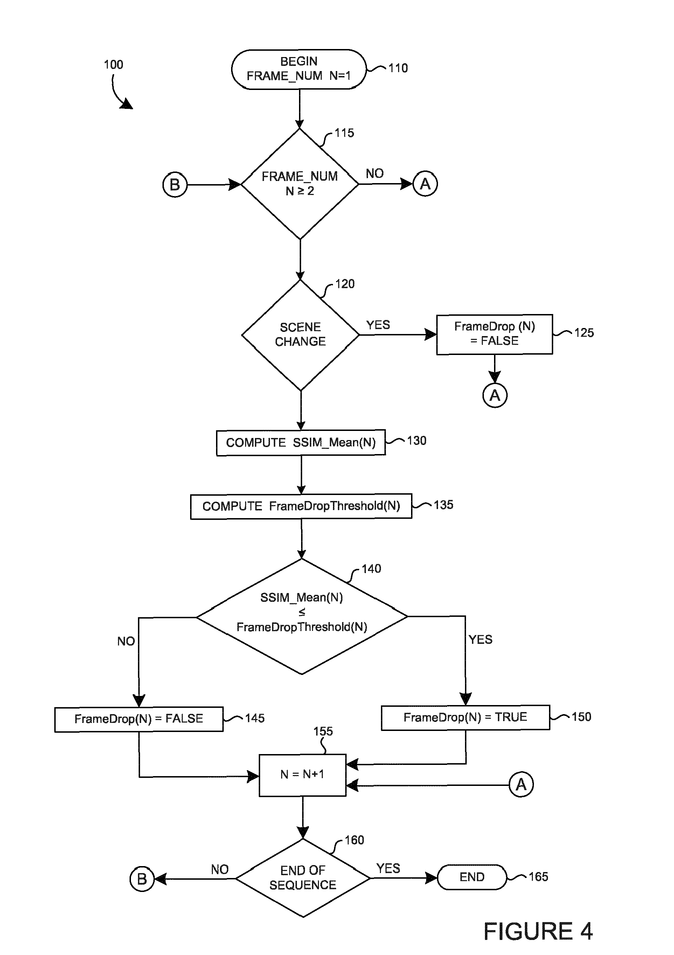

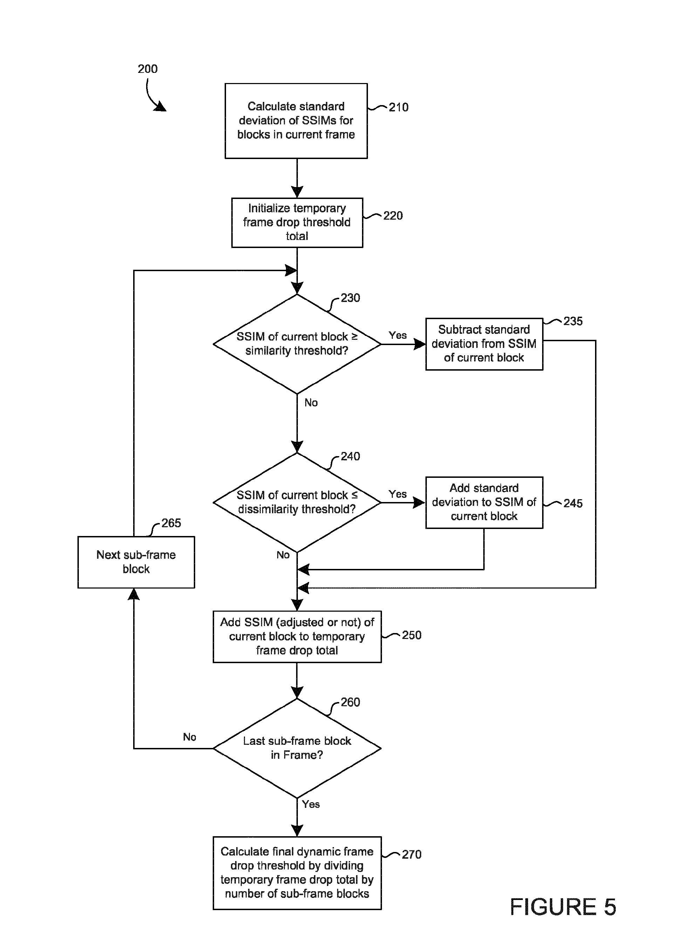

Where,
**[0024]** • x,y specify a small overlapping sliding window in the frame.
• Ux = Average of block x
• Uy = Average of block y
• $(\sigma_x)2$ = Variance of block x
• $(\sigma_y)2$ = Variance of block y
• $(\sigma_x)$ = Standard deviation of block x
• $(\sigma_y)$ = Standard deviation of block y
• $\sigma_{xy}$ = Co-variance of blocks x & y
• C1 = a constant defined as (k1 L)2 (k1 - 0.01)
• C2 = a constant defined as (k2 L)2 (k2 - 0.03)
• C3 = C2/2
• L = Dynamic range of pixels - (2bits_per_pixel - 1)
Embodiments of the invention make use of the principle that when certain video frames are dropped between two consecutive frames, the two frames tend to become inherently "dissimilar" because of the temporal distance between them. The higher the number of frames dropped between them, the greater is the temporal distance - and consequently, larger is the dissimilarity. This is illustrated in Fig. 2. Building on this principle, the SSIM between two consecutive frames is calculated. A dynamic threshold on a per frame basis is also evaluated which takes into account the local variations of every small block in the current frame N, as described below with reference to Fig. 5. Then, a final comparison between the threshold and the SSIM decides whether any frames were dropped between N and (N-1), as described with reference to Fig. 4.

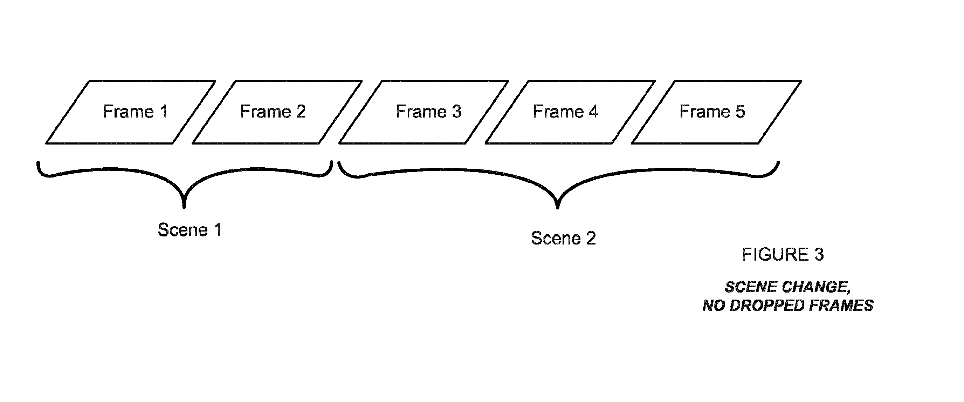

As illustrated in Fig. 3, an aspect to consider when detecting frame drops is a "scene-change" in a video sequence. Typically, there will be points in a video sequence where there is an abrupt transition from one "scene" to another, such as illustrated in Fig. 3. In Fig. 3, a first scene comprises Frames 1 and 2, while a second scene comprises Frames 3, 4, and 5. Of course, scenes are typically longer than two or three frames, and this illustration is only made to convey the concept. Such scene transitions should not be accounted as frame drops, even though Frame 3 will be quite different that Frame 2. Hence, as a precursor to the below-described method, scene-change detection is first carried out on a given frame. If it is indeed detected to be the beginning of a new 'scene,' no further processing is needed and the next frame in the sequence is evaluated for frame drop.

Any scene-change detection techniques could be used, such as the one described in "Fast pixel-based video scene change detection," a paper by Xiaoquan Yi and Nam Ling, published in the Annual International Symposium on Computer Architecture, June, 2005, which is incorporated by reference herein.

As illustrated in Fig. 4, an example method for detecting dropped video frames in a stream of video frames is shown. In Fig. 4, the example method 100 begins at an operation 110, which begins at a first frame in a video stream made from a series of frames. As this example method computes an SSIM between frames, immediately after the operation 110, the method 100 exits an operation 115 through direction "A," which simply advances to the next frame in the video in an operation 155. Next, an operation 160 determines whether the end of the sequence is reached. In this case, the end has not been reached so operation 160 exits in the "B" direction, back to the operation 115.

The second and subsequent times through operation 115, the method 100 exits to an operation 120, which determines if there has been a scene change between the present frame and the one immediately preceding it. If there was a scene change, an operation 125 determines that there has not been a frame drop, and the method immediately proceeds to operation 155, which advances the method 100 to the next frame. If instead in operation 120 there was no scene change, a mean SSIM is computed for the present frame in an operation 130, using, for example, techniques as described above.

Next, a dynamic frame drop threshold is computed in an operation 135. More details of computing the dynamic frame drop threshold are given with reference to Fig. 5, but generally a threshold is calculated that determines whether sub-frame blocks that make up the current frame are similar to one another or further apart from one another.

After computing the dynamic frame threshold for the current frame, the mean SSIM for the frame computed in the operation 130 is compared to the frame drop threshold computed in the operation 135. If the mean SSIM is below or equal to the computed dynamic frame drop threshold, then the stream is labeled as including a dropped frame in an operation 150. If instead the mean SSIM is above the dynamic frame drop threshold, then the operation 145 determines that the stream has not dropped frames between the current frame and the preceding frame.

An operation 155 advances to the next frame in the stream and returns to the operation 115 to analyze the next frame. Instead, if the operation 150 determines that the sequence has ended, the method 100 ends its processing at 165.

Thus embodiments of the invention detect dropped video frames in a stream of video frames by first determining a quality measure of a transition in a video to a current frame from a previous frame. As described above, this measure may be determined by computing an SSIM for the current frame. Next the quality measure is compared to a threshold difference level. Finally, embodiments of the invention indicate that there is a dropped frame in the stream of video frames when the quality measure meets or exceeds the threshold difference level.

Some embodiments additionally determine whether there was a scene change between the current frame and the previous frame, and, if so, omit the processing for the current frame.

Some embodiments compute the threshold difference level by generating a dynamic threshold level. This may include comparing an SSIM of a plurality of sub-frame blocks of the current frame to a measure of similarity for the compared sub-frame block. Other embodiments also compare the SSIM of a plurality of sub-frame blocks to a measure of dissimilarity.

Fig. 5 illustrates an example method 200 for computing the dynamic threshold level. The method 200 begins at an operation 210 by calculating a measure, such as standard deviation of the SSIMs, for the sub-frame blocks in the current frame. A temporary frame drop threshold total is initialized in an operation 220.

An operation 230 compares the SSIM of the current sub-frame block to a similarity threshold. The similarity threshold may be empirically determined, and may be adjusted for various types of applications. If the SSIM of the current sub-frame block equals or exceeds the similarity threshold, then the standard deviation is subtracted from the SSIM of the current sub-frame block in an operation 235. This effectively "rewards" similar blocks by reducing the frame drop threshold.

Next, an operation 240 compares the SSIM of the current sub-frame block to a dissimilarity threshold, which may likewise be empirically determined. If the SSIM of the current sub-frame block is equal to or less than the dissimilarty threshold, then the standard deviation is added to the SSIM of the current sub-frame block in an operation 245. This effectively "punishes" dissimilar blocks by increasing the frame drop threshold.

An operation 250 adds the SSIM for the current sub-frame block, whether it has been adjusted in the operations 235 or 245 or not, to the temporary frame drop total. If the current block is the last sub-frame block in the Frame, the method 200 exits an operation 260 in the "Yes" direction, and the final dynamic frame drop threshold is determined in an operation 270 by generating a mean frame drop threshold. If instead there are more sub-frame blocks to compute, the next block is incremented in an operation 265 and the method 200 returns back to operation 230 for further processing.

The method may be performed by particularized hardware, such as an Application Specific Integrated Circuit (ASIC), or by a Digital Signal Processor (DSP), for example. Other embodiments may include a programmed Field Programmable Gate Array (FPGA), or particularized circuitry. Other embodiments may be performed on specialty computer processors or one or more specifically programmed general processors.

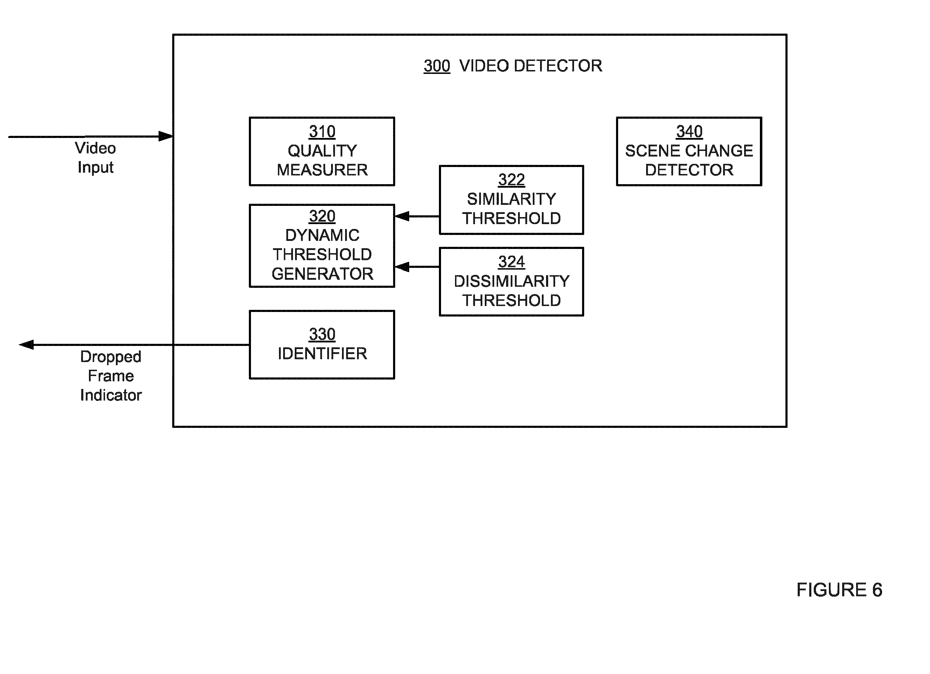

An example embodiment of the video decoder according to embodiments of the invention is illustrated in Fig. 6, which shows a video detector 300 for detecting dropped frames in a video. An input to the detector 300 accepts a video, which is made of a number of frames. The frames may be formed from a number of sub-frame blocks. A quality measurer 310 is structured to generate a quality measure of a transition between a current frame and a previous frame of the video signal. A dynamic threshold generator 320 is structured to generate a threshold value based on a comparison of blocks within the current frame, such as by using techniques the same as or similar to the method 200 described above with reference to Fig. 5. The video detector 300 also includes an identifier 330 structured to indicate the video as having a dropped frame based on a comparison between the difference value and the threshold value. In some embodiments the quality measurer 310 is a Structural Similarity Index Metric (SSIM) calculator.

The dynamic threshold generator 320 may accept as inputs a similarity threshold 322 and a dissimilarity threshold 324, both of which may be empirically determined.

The video detector 300 may also include a scene change detector 340 structured to determine if there was a scene change between the current frame and a previous frame.

As described above, in various embodiments, components of the invention may be implemented in hardware, software, or a combination of the two, and may comprise a general purpose microprocessor, a digital signal processor (DSP), an application specific integrated circuit (ASIC), a field-programmable gate array (FPGA), or the like.

It will be appreciated from the forgoing discussion that the present invention represents a significant advance in video detection. Although specific embodiments of the invention have been illustrated and described for purposes of illustration, it will be understood that various modifications may be made without departing from the scope of the invention. Accordingly, the invention should not be limited except as by the appended claims.

### Claims

1. A video detector for detecting dropped frames in a video that includes a number of individual sequential frames, each frame made from a number of individual blocks, the detector comprising:

   an input for accepting the video;
   a quality measurer structured to generate a quality measure of a transition between a current frame and a previous frame;
   a dynamic threshold generator structured to generate a threshold value based on a comparison of blocks within the current frame; and
   an identifier structured to indicate the video as having a dropped frame based on a comparison between the difference value and the threshold value.

2. The video detector for detecting dropped frames according to claim 1 in which the quality measurer is a Structural Similarity Index Metric (SSIM) calculator.

3. The video detector for detecting dropped frames according to claim 1 or 2 in which the dynamic threshold generator is structured to compare an SSIM of sub-frame blocks of the current frame to a measure of similarity for the compared sub-frame block.

4. The video detector for detecting dropped frames according to claim 3 in which the dynamic threshold generator is further structured to compare the SSIM of sub-frame blocks of the current frame to a measure of dissimilarity for the compared sub-frame block.

5. The video detector for detecting dropped frames according to claim 4 in which the measure of similarity and the measure of dissimilarity are empirically derived.

6. The video detector for detecting dropped frames according to any of claims 1 to 5, further comprising a scene change detector structured to determine if there was a scene change between the first frame and the second frame.

7. The video detector for detecting dropped frames according to claim 6, in which, when the scene change detector determines that there was a scene change between the first frame and the second frame, the video detector is structured to cause the quality measurer and dynamic threshold generator to not generate values for the current frame.

8. A method for detecting dropped video frames in a stream of video frames, the method comprising:

   determining a quality measure of a transition in a video to a current frame from a previous frame;
   comparing the quality measure to a threshold difference level; and
   indicating that there is a dropped frame in the stream of video frames when the quality measure meets or exceeds the threshold difference level.

9. The method for detecting dropped video frames in a stream of video frames according to claim 8, in which determining a quality measure of a transition comprises generating a Structural Similarity Index Metric (SSIM).

10. The method for detecting dropped video frames in a stream of video frames according to claim 8 or 9, further comprising:

   determining whether there was a scene change between the current frame and the previous frame.

11. The method for detecting dropped video frames in a stream of video frames according to any of claims 8 to 10, further comprising:

   generating the threshold difference level.

12. The method for detecting dropped video frames in a stream of video frames according to claim 11 in which generating the threshold difference level comprises generating a dynamic threshold level.

13. The method for detecting dropped video frames in a stream of video frames according to claim 12, in which:

   generating the dynamic threshold level comprises comparing an SSIM of a plurality of sub-frame blocks of the current frame to a measure of similarity for the compared sub-frame block.

14. The method for detecting dropped video frames in a stream of video frames according to claim 13, further comprising:

   comparing the SSIM of a plurality of sub-frame blocks of the current frame to a measure of dissimilarity for the compared sub-frame block.

Scene 1

FIGURE 1

**SINGLE SCENE, BUT SOME FRAMES ARE DROPPED**

DROPPED FRAMES

Temporal Difference based on number of dropped frames

FIGURE 2

EP 2 670 151 A1

Frame 1 | Frame 2 | Frame 3 | Frame 4 | Frame 5

Scene 1

Scene 2

FIGURE 3

*SCENE CHANGE,*
*NO DROPPED FRAMES*

EP 2 670 151 A1

FIGURE 4

200

Calculate standard deviation of SSIMs for blocks in current frame — 210

Initialize temporary frame drop threshold total — 220

230 — SSIM of current block ≥ similarity threshold?

Yes → Subtract standard deviation from SSIM of current block — 235

No

240 — SSIM of current block ≤ dissimilarity threshold?

Yes → Add standard deviation to SSIM of current block — 245

No

265 — Next sub-frame block

Add SSIM (adjusted or not) of current block to temporary frame drop total — 250

260 — Last sub-frame block in Frame?

No

Yes

Calculate final dynamic frame drop threshold by dividing temporary frame drop total by number of sub-frame blocks — 270

FIGURE 5

300 VIDEO DETECTOR

340 SCENE CHANGE DETECTOR

322 SIMILARITY THRESHOLD

324 DISSIMILARITY THRESHOLD

310 QUALITY MEASURER

320 DYNAMIC THRESHOLD GENERATOR

330 IDENTIFIER

Video Input

Dropped Frame Indicator

FIGURE 6

Europäisches Patentamt

European Patent Office

Office européen des brevets

# EUROPEAN SEARCH REPORT

Application Number

EP 13 16 9169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VLADIMIR ZLOKOLICA ET AL: "Video freezing detection system for end-user devices", CONSUMER ELECTRONICS (ICCE), 2011 IEEE INTERNATIONAL CONFERENCE ON, IEEE, 9 January 2011 (2011-01-09), pages 81-82, XP031921530, DOI: 10.1109/ICCE.2011.5722883 ISBN: 978-1-4244-8711-0 * Section III: Algorithm detection; figure 2 * | 1-14 | INV. H04N17/00 G06T7/00 |
| X | EP 2 048 871 A1 (TEKTRONIX INT SALES GMBH [CH]) 15 April 2009 (2009-04-15) * figure 2 * | 1 | |
| A | GAUSS S ET AL: "Objective video quality assessment of mobile television receivers", CONSUMER ELECTRONICS (ISCE), 2010 IEEE 14TH INTERNATIONAL SYMPOSIUM ON, IEEE, PISCATAWAY, NJ, USA, 7 June 2010 (2010-06-07), pages 1-6, XP031716439, ISBN: 978-1-4244-6671-9 * Section III. Objective video quality assessment * | 1-14 | |
| | | | TECHNICAL FIELDS SEARCHED (IPC) |
| | | | H04N G06T |
| A | YANG, KAI-CHIEH; EL-MALEH, KHALED; BHASKAREN, VASUDEV: "Video quality management for mobile video application", SPIE, PO BOX 10 BELLINGHAM WA 98227-0010 USA, 7 September 2010 (2010-09-07), XP040527657, DOI: 10.1117/12.863014 * Section 3. Video experience assessment; figure 5 * | 1-14 | |

-/--

The present search report has been drawn up for all claims

| Place of search | Date of completion of the search | Examiner |
|---|---|---|
| Munich | 4 September 2013 | Tillier, Christophe |

Europäisches
Patentamt

European
Patent Office

Office européen
des brevets

**EUROPEAN SEARCH REPORT**

Application Number

EP 13 16 9169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/280129 A1 (JIA HUIXING [CN] ET AL) 6 December 2007 (2007-12-06) * the whole document * ----- | 1-14 | |
| A | Stephen Wolf: "A no reference (NR) and reduced reference (RR) metric for detecting dropped video frmaes", Fourth International Workshop on Video Processing and  Quality Metrics for Consumer Electronics, 16 January 2009 (2009-01-16), XP055077554, Retrieved from the Internet: URL:http://enpub.fulton.asu.edu/resp/vpqm/vpqm09/Proceedings_VPQM09/Papers/vpqm_09_v2.pdf [retrieved on 2013-09-03] * the whole document * ----- | 1-14 | |
| A | PASTRANA-VIDAL R ET AL: "Automatic quality assessment of video fluidity impairments using a no-reference metric", VPQM 2006 SECOND INTERNATIONAL WORKSHOP ON VIDEO PROCESSING AND QUALITY METRICS FOR CONSUMER ELECTRONICS, , 1 January 2006 (2006-01-01), pages 1-6, XP002609870, Retrieved from the Internet: URL:http://enpub.fulton.asu.edu/resp/vpqm2006/papers06/311.pdf * the whole document * ----- | 1-14 | TECHNICAL FIELDS SEARCHED (IPC) |
| A | EP 2 112 835 A1 (PSYTECHNICS LTD [GB]) 28 October 2009 (2009-10-28) * the whole document * ----- | 1-14 | |
| A | US 2010/053335 A1 (HONG SEUNG SEOK [KR] ET AL) 4 March 2010 (2010-03-04) * the whole document * ----- | 1-14 | |

The present search report has been drawn up for all claims

| Place of search | Date of completion of the search | Examiner |
|---|---|---|
| Munich | 4 September 2013 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 16 9169

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2013

| Patent document cited in search report | | Publication date | Patent family member(s) | | | Publication date |
|---|---|---|---|---|---|---|
| EP 2048871 | A1 | 15-04-2009 | EP | 2048871 | A1 | 15-04-2009 |
| | | | JP | 2009095029 | A | 30-04-2009 |
| | | | US | 2009128633 | A1 | 21-05-2009 |
| US 2007280129 | A1 | 06-12-2007 | CN | 101087438 | A | 12-12-2007 |
| | | | US | 2007280129 | A1 | 06-12-2007 |
| EP 2112835 | A1 | 28-10-2009 | EP | 2112835 | A1 | 28-10-2009 |
| | | | US | 2009273678 | A1 | 05-11-2009 |
| US 2010053335 | A1 | 04-03-2010 | KR | 100938211 | B1 | 22-01-2010 |
| | | | US | 2010053335 | A1 | 04-03-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. WANG et al.** Image Quality Assessment: From Error Visibility to Structural Similarity. *IEEE Transactions on Image Processing,* April 2004, vol. 13 (4

- **XIAOQUAN YI ; NAM LING.** Fast pixel-based video scene change detection. *Annual International Symposium on Computer Architecture,* June 2005